# EUROPEAN PATENT SPECIFICATION

(11) **EP 0 361 056 B1**
(45) Date of publication and mention of the grant of the patent: **14.04.1993**
(21) Application number: 89115155.7
(22) Date of filing: 17.08.1989
(51) Int. Cl.: F16J 15/26

(54) **Face sealing structure**
Dichtung
Garniture

(30) Priority: 26.09.1988 DK 5343/88; 02.02.1989 DK 488/89
(43) Date of publication of application: 04.04.1990
(73) Proprietor: W.S. Shamban Europa A/S, DK-3000 Helsingor (DK)
(72) Inventor: Kirkegaard, Kim Schultz, DK-2950 Vedbaek (DK)
(74) Representative: Vingtoft, Knud Erik

(56) References cited:
- DE-A- 2 207 650
- FR-A- 1 588 804
- GB-A- 2 115 518
- GB-A- 2 125 492
- US-A- 3 606 348
- US-A- 3 630 532
- US-A- 3 717 293
- NASA Tech Briefs, Fall 1978, Vol. 3, No. 3, MFS-19335

## Description

The present invention relates to a face sealing structure. More specifically, the present invention relates to a face sealing adapted for use at low temperatures, particularly at extremely low temperatures such as under cryogenic conditions or to be exposed to extreme temperature variation.

Face sealings are employed in a lot of applications in e.g. industry or transportation. A face seal is generally used when two substantially plane and complementary surface parts are to be sealed which surface parts are normally stationary in relation to each other at the time of the generation of the sealing effect.

Generally, metal sealings are used for generating a face sealing under cryogenic conditions. Such a sealing is exposed to a deformation when two sealing surfaces are put tightly together for providing the sealing effect. A disadvantage of this known technique is that the above deformation results in a permanent deformation so that the seals can be used only once.

Synthetic and natural rubbers and plastic materials are often used for providing face sealings. However, most of these materials become more or less brittle at low temperatures and they are consequently not suitable for use under cryogenic conditions.

In the field of radial low temperature sealing, i.e. sealing between two reciprocating parts, such as a piston and a bore, a technical solution is described in "NASA Tech Briefs, Fall 1978 Vol. 3, No. 3, MFS-19335". However this known sealing structure comprising a sealing ring component is not readily adaptable for use as a face sealing, as a conversion of the radial sealing arrangement to a face sealing arrangement inevitably leads to a sealing structure which is not retained in a groove of one of the components of the sealing arrangement when the components are drawn from each other. Consequently the sealing ring component tends to fall out.

FR-A-1 588 804 discloses sealing structures comprising two sealing rings arranged within an annular channel or space. The sealing rings comprise complementary, mutually engaging inclined cam surfaces, which are pressed together by a biassing spring member arranged within the space or channel. This known sealing structure may be used for sealing spaces defined between structural members, such as a housing and a rotating shaft or a reciprocating piston rod. The biassing spring member and the mutually engaging inclined cam surfaces of the sealing rings cooperate so as to secure that the sealing rings are pressed into sealing engagement with opposite surfaces of the structural members, which are movable in relation to each other.

The object of the present invention is to provide a sealing structure of this known type, which maintains its sealing efficiency even when the pressure difference across the sealing structure and/or the width of the space to be sealed vary substantially.

The face sealing structure according to the invention comprises a first body member having a first surface part defining therein an annular recess having a bottom surface and an inner side surface, a first sealing ring having inner and outer side surface parts and a sealing surface, the inner side surface part of the first sealing ring being in abutting engagement with the adjacent inner side surface of the recess and the outer side surface part of the first sealing ring being a first cam surface part inclined in relation to the inner side surface part, a second sealing ring having inner and outer side surface parts and a sealing surface, the inner side surface part of the second sealing ring being a second cam surface part, which is in abutting engagement with the first cam surface part of the first sealing ring so as to tend to move the first sealing ring outwardly from the recess when the second cam surface is pressed against the first cam surface, and biasing means being in abutting engagement with the outer side surface part of the second sealing ring for biasing the second sealing ring in a direction towards the inner side surface of the recess, whereby the first sealing ring is clamped between the second sealing ring and the inner side surface of the recess, and the sealing structure according to the invention is characterized in that a groove containing auxiliary biasing means is defined in the upper part of the inner side surface part of the first sealing ring.

An increase of the pressure at the inner side of the sealing structure causes an expansion of the groove containing the auxiliary biasing means, whereby the sealing pressure is increased. The groove containing the auxiliary biasing means also substantially improves the sealing efficiency of the sealing structure when the width of the space to be sealed is increased.

WO 86/06453 discloses a sealing device surrounding a reciprocating plunger and comprising pairs of sealing rings having inclined cam surfaces being in mutual engagement. Each pair of sealing rings define together at their inner side surface an annular groove for receiving a toroidal member being of an elastic material and covering the joint formed by the mutually abutting cam surfaces of the sealing rings.

In the sealing structure according to the invention the sealing rings and the biasing means may be retained in the recess when the sealing structure is not in use, i.e. when the first sealing ring is not in abutting engagement with a counter part.

According to the invention the recess is preferably a groove having a rectangular cross-section, which provides for a simple and cheap manufacture of the recess.

Preferably, the inner side surface part and the sealing surface of each of said sealing rings define a substantially right angle. This feature provides the largest possible sealing surfaces when the sealing structure is arranged in abutting engagement with a substantially plane counter part.

In the presently preferred embodiment of the invention, the sealing rings are made of PTFE and furthermore the sealing surface and the cam surface of each of said sealing rings preferably define an angle of approximately 60° - 80°, most preferably approximately 75°.

The above characteristic features provide a sealing structure which may advantageously be used under cryogenic conditions and the above preferred angle provides for a large displacement, such as 1/3 of the height of the inner side of the sealing ring, of the first sealing ring in a direction out of the groove in relation to the displacement of the second sealing ring in the direction towards the inner side surface of the groove.

The sealing rings according to the invention preferably have identical quadrangular cross-sectional shape and size implying a particularly simple manufacturing process as the sealing rings can be produced from a continuous length of the above shape. The sealing rings are simply cut from the above length and the ends of each sealing ring are put together, e.g. by welding. Alternatively, the sealing rings may be composed of segments of the sealing ring material, e.g. segments of the above cross-sectional shape and size which are put together one after the other.

In a preferred embodiment of a sealing structure according to the invention, for use when large clearances occur between the surfaces to be sealed, the second sealing ring defines a groove in the lower part of the cam surface. The grooves preferably have reduced openings for retaining auxiliary biasing means contained in said grooves. The auxiliary biasing means provide for an initial activation of the sealing structure.

It has been realized that when less than 50% of the cross-sectional area of said first sealing ring is located outside the groove the tendency of keeping the sealing ring in the groove is pronounced.

The biasing means preferably comprise a helically wound spring made of steel which is suited under cryogenic conditions.

The invention will now be described in details by way of an example and with reference to the accompanying drawings in which
Fig. 1 is a sectional view of an embodiment of a sealing structure according to the invention, and
Fig. 2 is a sectional view showing two such sealing arrangements in use.

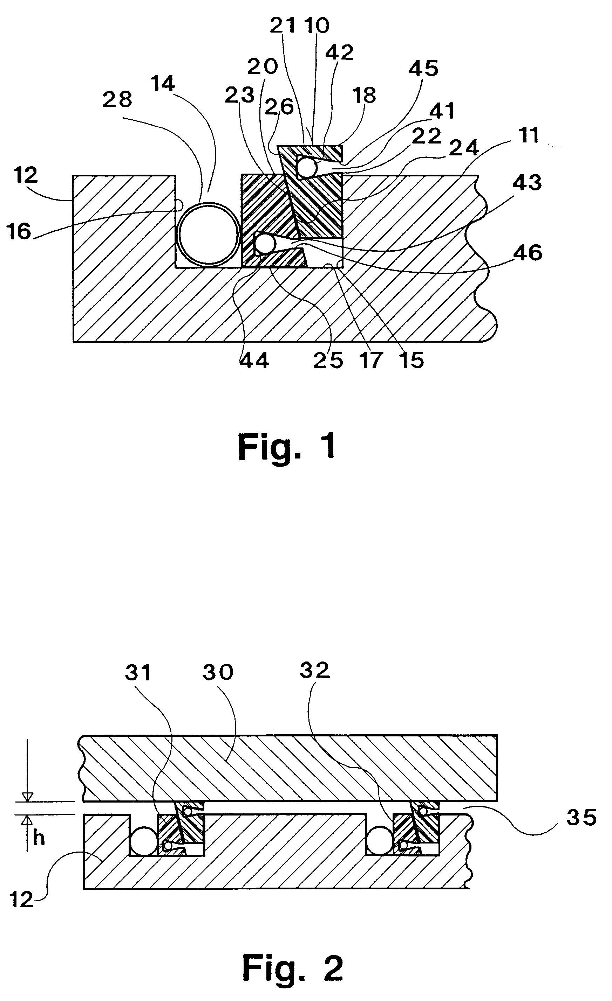

In Fig. 1, a sealing structure according to the present invention is shown designated 10 in its entirety. In a body member, such as a steel plate 12 which has a generally plane upper surface 11, an annular groove 14 is defined which has an inner side surface 15, an outer side surface 16, and a bottom surface 17. A first and a second annular PTFE sealing ring 18 and 20, respectively, are arranged within the groove 14. The first sealing ring 18 has a top sealing surface 21 which is to be put into contact with a counter part, such as a surface of a metal component (not shown in Fig. 1). Furthermore, the first sealing ring 18 has a side surface part 22 which is in abutting contact with the inner side surface 15 of the groove 14, and an inclined cam surface part 23 which is in abutting contact with a corresponding cam surface 24 of the second sealing ring 20. The cam surfaces 23 and 24 are inclined in opposite directions. Additionally, the second sealing ring 20 defines a sealing surface 25 which is in sealing contact with the bottom surface 17 of the groove 14 and a side surface 26 which is in abutting contact with a helically wound annular steel spring 28.

The spring 28 biases the second sealing ring 20 in a direction towards the inner side surface 15 of the groove 14. The second sealing ring 20 in turn biases the first sealing ring 18 by applying a pressure to the cam surface 23, and the pressure applied to the cam surface 23 of the first sealing ring 18 generates a friction force between the inner side surface 22 of the first sealing ring 18 and the inner side surface 15 of the groove 14.

The friction force generated between the inner side surface 22 of the first sealing ring 18 and the inner side surface 15 of the groove 14 retains the first sealing ring 18 in the groove 14 and consequently also the second sealing ring 20 and the spring 28. The tendency of retaining the sealing rings 18, 20 and the spring 28 in the groove is increased due to a pretension of the sealing rings. The first sealing ring is stretched approximately 0.3-1.2%, and the second sealing ring is stretched approximately 0.1-0.6%.

In use, the sealing structure according to the invention is put together with a counter part 30, as is shown in Fig. 2, for providing a fluid tight sealing. The embodiment of the sealing arrangement according to the invention shown in Fig. 2 comprises two sealing structures 31, 32 similar to the sealing structure 10 in Fig. 1 and is adapted for use under cryogenic conditions. Thus, a low temperature shrinkage of the sealing rings is accomplished under cryogenic conditions. In use, however, a state of equilibrium is reached which due to the action from the biasing means 28 copes with the clearance between the two surfaces to be sealed regardless of shrinkage of the sealing rings, and in which sealing engagement is obtained between the sealing surface 21 of the first sealing ring 18 and the surface of the above mentioned counter part 30 (Fig. 2), between the inner side surface 22 of the first sealing ring 18 and the inner side surface 15 of the groove 14, between the cam surfaces 23, 24 of the sealing rings 18, 20, and between the sealing surface 25 of the second sealing ring 20 and the bottom surface 17 of the groove 14. The sealing effect is initially activated due to the biasing effect from the spring. Moreover, under cryogenic conditions an increased sealing effect is generated due to the pressure gradient from the environment to the cryogenic state defining enclosure which pressure gradient acts on the outer side surface of the second sealing ring 20 and on the part of the cam surface 23 of the first sealing ring 18, which is not in engagement with the cam surface 24 of the second sealing ring 20.

The embodiment of a sealing arrangement according to the invention shown in Fig. 2 provides a satisfactory sealing effect when the height h of the gap 35 varies from approximately 0.3 to 2 mm, but the high pressure sealing effect is inadequate in case of greater clearances.

To achieve a sealing effect when greater clearances occur the upper part of the inner side surface 22 the first sealing ring 21 is provided with a groove 41 in which an auxiliary biasing means 42, such as a steel spring, is arranged, and at the lower part of the cam surface 24 the second sealing ring 23 is provided with a similar groove 43 containing an auxiliary biasing means 44. The grooves 41 and 43 have bottle-like cross-sections, and the reduced openings 45 and 46 tend to retain the respective auxiliary biasing means 42 and 44 in the grooves 41 and 43. Further to improve the sealing effect in case of greater clearances these features provide for a better sealing effect at low as well as higher pressure differences, as the sealing lips are biased into tighter engagement with the counterpart 30 (Fig. 2) and with the bottom surface 17 of the groove 14.

For some applications, two (as shown, in Fig. 2) or more sealing structures according to the present invention are preferably employed in a face sealing of two metal or steel surface components of large dimensions, such as the face sealing of a component having a perimeter of the order of 10 m. In these applications, the sealing structure of the present invention provides a sealing arrangement which gives a high sealing effect and a minimum risk of leakage.

As will be evident from the above description, a sealing structure is provided, which exhibits outstanding performance. The sealing structure is applicable for use at extremely low temperatures, such as a temperature of -191°C for sealing a low temperature test chamber, e.g. a test chamber in which a temperature of -191°C prevails. The sealing effect of the sealing structure according to the present invention is comparable and equal to the sealing effect of an O-ring, used under room temperature conditions.

## Claims

1. A face sealing structure comprising
a first body member (12) having a first surface part defining therein an annular recess (14) having a bottom surface (17) and an inner side surface (15),
a first sealing ring (18) having inner and outer side surface parts (22, 23) and a sealing surface (21), the inner side surface part (22) of the first sealing ring (18) being in abutting engagement with the adjacent inner side surface (15) of the recess and the outer side surface part (23) of the first sealing ring being a first cam surface part inclined in relation to the inner side surface part (22),
a second sealing ring (20) having inner and outer side surface parts (24, 26) and a sealing surface (25), the inner side surface part (24) of the second sealing ring (20) being a second cam surface part, which is in abutting engagement with the first cam surface part (23) of the first sealing ring (18) so as to tend to move the first sealing ring outwardly from the recess when the second cam surface is pressed against the first cam surface, and
biasing means (28) being in abutting engagement with the outer side surface part (26) of the second sealing ring (20) for biasing the second sealing ring in a direction towards the inner side surface (15) of the recess (14), whereby the first sealing ring is clamped between the second sealing ring and the inner side surface of the recess,
**characterized** in that a groove (41) containing auxilary biasing means (42) is defined in the upper part of the inner side surface part (22) of the first sealing ring (18).

2. A face sealing structure according to claim 1,
wherein a groove (43) is also defined in the lower part of the cam surface part (24) of the second sealing ring (20).

3. A face sealing structure according to claim 1 or 2,
wherein the recess (14) is a groove having a rectangular cross-sectional shape.

4. A face sealing structure according to any of the claims 1-3,
wherein the inner side surface part and the sealing surface of each of said sealing rings (18, 20) define a substantially right angle.

5. A face sealing structure according to any of the claims 1-4,
wherein the sealing surface and the cam surface of each of said sealing rings (18, 20) define an angle of between 60° and 80°.

6. A face sealing structure according to any of the claims 1-5,
wherein the angle defined between the sealing surface and the cam surface of each of said sealing rings is approximately 75°.

7. A face sealing structure according to any of the claims 3-6,
wherein less than 50% of the cross-sectional area of the first sealing ring (18) is located outside the recess (14).

8. A face sealing structure according to any of the claims to 1-7,
wherein the cam surface parts (23, 24) are substantially plane.

9. A face sealing structure according to any of the claims 1-8,
wherein the cross-sections of the sealing rings (18, 20) are of the same quadrangular shape and size.

10. A face sealing structure according to any of the claims 1-9,
wherein any of the grooves (41, 43) have reduced openings.

11. A face sealing structure according to any of claims 1-10,
wherein the groove (43) of the second sealing ring (20) contains auxiliary biasing means (44).

12. A face sealing structure according to any of the claims 1-11,
wherein at least one of said sealing rings (18, 20) are made of PTFE.

13. A face sealing structure according to any of the claims 1-12,
wherein the biasing means and/or the auxiliary biasing means comprise helically wound springs made of steel.

## Patentansprüche

1. Flächendichtungsstruktur mit
einem ersten Körperelement (12) mit einem ersten Flächenteil, in das eine ringförmige Ausnehmung (14) mit einer Bodenfläche (17) und einer Seitenfläche (15) ausgebildet ist,
einem ersten Dichtungsring (18) mit inneren und äußeren Seitenflächenteilen (22, 23) und einer Dichtfläche (21), wobei der innere Seitenflächenteil (22) des ersten Dichtungsringes (18) sich in berührendem Eingriff mit der benachbarten inneren Seitenfläche (15) der Ausnehmung befindet und der äußere Seitenflächenteil (23) des ersten Dichtungsringes ein erstes Nockenflächenteil ist, das gegenüber dem inneren Seitenflächenteil (22) geneigt ist,
einem zweiten Dichtungsring (20) mit inneren und äußeren Seitenflächenteilen (24, 26) und einer Dichtfläche (25), wobei der innere Seitenflächenteil (24) des zweiten Dichtungsringes (20) ein zweites Nockenflächenteil ist, das sich in berührendem Eingriff mit dem ersten Nockenflächenteil (23) des ersten Dichtungsringes (18) befindet, um den ersten Dichtungsring nach außen von der Ausnehmung wegzubewegen, wenn die zweite Nockenfläche gegen die erste Nockenfläche gedrückt wird, und
Spannmitteln (28), die sich in berührendem Eingriff mit dem äußeren Seitenflächenteil (26) des zweiten Dichtungsringes (20) zum Spannen des zweiten Dichtungsringes in einer Richtung zur inneren Seitenfläche (15) der Ausnehmung (14) befindet, wodurch der erste Dichtungsring zwischen den zweiten Dichtungsring und der inneren Seitenfläche der Ausnehmung geklemmt wird,
dadurch gekennzeichnet, daß eine Hilfsspannmittel (42) enthaltende Nut (41) im oberen Teil des inneren Seitenflächenteils (22) des ersten Dichtungsringes (18) ausgebildet ist.

2. Flächendichtungsstruktur nach Anspruch 1,
bei welcher eine Nut (43) ebenfalls im unteren Teil des Nockenflächenteils (24) des zweiten Dichtungsringes (20) ausgebildet ist.

3. Flächendichtungsstruktur nach Anspruch 1 oder 2,
bei welcher die Ausnehmung (14) eine Nut mit rechteckiger Querschnittsform ist.

4. Flächendichtungsstruktur nach einem der Ansprüche 1 bis 3,
bei welcher der innere Seitenflächenteil und die Dichtfläche von jedem der Dichtungsringe (18, 20) einen im wesentlichen rechten Winkel bilden.

5. Flächendichtungsstruktur nach einem der Ansprüche 1 bis 4,
bei welcher die Dichtfläche und die Nockenfläche von jedem der Dichtungsringe (18, 20) einen Winkel zwischen 60° und 80° bildet.

6. Flächendichtungsstruktur nach einem der Ansprüche 1 bis 5,
bei welcher der Winkel zwischen der Dichtfläche und der Nockenfläche von jedem der Dichtungsringe etwa 75° beträgt.

7. Flächendichtungsstruktur nach einem der Ansprüche 2 bis 6,
bei welcher weniger als 50 % der Querschnittsfläche des ersten Dichtungsringes (18) oberhalb der Ausnehmung (14) liegt.

8. Flächendichtungsstruktur nach einem der Ansprüche 1 bis 7,
bei welcher die Nockenflächenteile (23, 24) im wesentlichen eben sind.

9. Flächendichtungsstruktur nach einem der Ansprüche 1 bis 8,
bei welcher die Querschnitte der Dichtungsringe (18, 20) von derselben Vierecksform und Größe sind.

10. Flächendichtungsstruktur nach einem der Ansprüche 1 bis 9,
bei welcher jede der Nuten (41, 43) reduzierte Öffnungen besitzt.

11. Flächendichtungsstruktur nach einem der Ansprühe 1 bis 10,
bei welcher die Nut (43) des zweiten Dichtungsringes (20) Hilfsspannmittel (44) enthält.

12. Flächendichtungsstruktur nach einem der Ansprüche 1 bis 11,
bei welcher mindestens einer der Dichtungsringe (18, 20) aus PTFE besteht.

13. Flächendichtungsstruktur nach einem der Ansprüche 1 bis 12,
bei welcher die Spannmittel und/oder die Hilfsspannmittel schraubenförmig gewundene Stahlfedern aufweisen.

## Revendications

1. Structure d'étanchéité faciale, comprenant
un premier élément de corps (12) ayant un premier élément de surface comportant une cavité annulaire (14) ayant une surface de fond (17) et une surface latérale intérieure (15),
un premier anneau d'étanchéité (18) ayant des éléments intérieur et extérieur de surface latérale (22, 23) et une surface d'étanchéité (21), l'élément de surface latérale intérieure (22) du premier anneau d'étanchéité (18) étant en application contre la surface latérale intérieure voisine (15) de la cavité et l'élément de surface latérale extérieure (23) du premier anneau d'étanchéité étant un premier élément de surface de came qui est incliné par rapport à l'élément de surface latérale intérieure (22),
un second anneau d'étanchéité (20) ayant des éléments intérieur et extérieur de surface latérale (24, 26) et une surface d'étanchéité (25), l'élément de surface latérale intérieure (24) du second anneau d'étanchéité (20) étant un second élément de surface de came qui est en application contre le premier élément de surface de came (23) du premier anneau d'étanchéité (18) de façon qu'il tende à déplacer le premier anneau d'étanchéité vers l'extérieur en le faisant ressortir de la cavité lorsque la seconde surface de came est poussée contre la première surface de came et
un organe (28) exercant une force élastique étant en application contre l'élément de surface latérale extérieure (26) du second anneau d'étanchéité (20) afin de tendre à déplacer le second anneau d'étanchéité vers la surface latérale intérieure (15) de la cavité (14), de manière que le premier anneau d'étanchéité soit serré entre le second anneau d'étanchéité et la surface latérale intérieure de la cavité,
caractérisée en ce qu'une gorge (41) logeant un organe auxiliaire (42) exercant une force élastique est réalisée dans la partie supérieure de l'élément de surface latérale intérieure (22) du premier anneau d'étanchéité.

2. Structure d'étanchéité faciale selon la revendication 1, dans laquelle une gorge (43) est aussi réalisée à la partie inférieure de l'élément de surface de came (24) du second anneau d'étanchéité (20).

3. Structure d'étanchéité faciale selon la revendication 1 ou 2, dans laquelle la cavité (14) est une rainure ayant un profil transversal rectangulaire.

4. Structure d'étanchéité faciale selon l'une quelconque des revendications 1 à 3, dans laquelle l'élément de surface latérale intérieure et la surface d'étanchéité de chacun desdits anneaux d'étanchéité (18, 20) inscrivent un angle sensiblement droit.

5. Structure d'étanchéité faciale selon l'une quelconque des revendications 1 à 4, dans laquelle la surface d'étanchéité et la surface de came de chacun desdits anneaux d'étanchéité (18, 20) inscrivent un angle compris entre 60° et 80°.

6. Structure d'étanchéité faciale selon l'une quelconque des revendications 1-5, dans laquelle l'angle inscrit entre la surface d'étanchéité et la surface de came de chacun desdits anneaux d'étanchéité est approximativement de 75°.

7. Structure d'étanchéité faciale selon l'une quelconque des revendications 3-6, dans laquelle moins de 50 % de la superficie transversale du premier anneau d'étanchéité (18) sont placés à l'extérieur de la cavité (14).

8. Structure d'étanchéité faciale selon l'une quelconque des revendications 1-7, dans laquelle les éléments de surface de came (23, 24) sont sensiblement plans.

9. Structure d'étanchéité faciale selon l'une quelconque des revendications 1-8, dans laquelle les sections transversales des anneaux d'étanchéité (18, 20) ont la même forme quadrangulaire et la même dimension.

10. Structure d'étanchéité faciale selon l'une quelconque des revendication 1-9, dans laquelle l'une et l'autre des gorges (41, 43) ont des orifices restreints.

11. Structure d'étanchéité faciale selon l'une quelconque des revendications 1-10, dans laquelle la gorge (43) du second anneau d'étanchéité (20) loge un organe auxiliaire (44) exercant une force élastique.

12. Structure d'étanchéité faciale selon l'une quelconque des revendications 1-11, dans laquelle au moins l'un desdits anneaux d'étanchéité (18, 20) est en PTFE.

13. Structure d'étanchéité faciale selon l'une quelconque des revendications 1-12, dans laquelle l'organe exercant une force élastique et/ou les organes auxiliaires exercant une force élastique consistent en des ressorts hélicoïdaux d'acier.
